## Europäisches Patentamt

## European Patent Office

## Office européen des brevets

(19)

(11) Veröffentlichungsnummer: **0 008 718**
**B1**

(12) **EUROPÄISCHE PATENTSCHRIFT**

(45) Veröffentlichungstag der Patentschrift:
01.08.84

(21) Anmeldenummer: **79102972.1**

(22) Anmeldetag: **16.08.79**

(51) Int. Cl.³: **E 06 B 7/14**, A 01 G 9/14,
C 03 C 17/28, E 04 H 3/16

(54) Folienscheibe aus organischem Werkstoff.

(30) Priorität: 22.08.78 AT 6118/78
21.09.78 AT 6831/78
15.05.79 AT 3606/79
15.06.79 AT 4268/79

(43) Veröffentlichungstag der Anmeldung:
19.03.80 Patentblatt 80/6

(45) Bekanntmachung des Hinweises auf die Patenterteilung:
01.08.84 Patentblatt 84/31

(84) Benannte Vertragsstaaten:
BE CH DE FR GB IT NL SE

(56) Entgegenhaltungen:
DE - A - 2 748 179
DE - A - 2 749 133
DE - B - 2 159 257
DE - U - 1 911 212

KUNSTSTOFFE, Band 61, Nr. 12, 1971, München G.
SCHREYER et al. "Tageslichtelemente aus Acrylglas",
Seiten 865 und 866

(73) Patentinhaber: Laing, Karsten, Hofener Weg 35-37,
D-7148 Remseck 2- Aldingen (DE)

(72) Erfinder: Laing, Karsten, Hofener Weg 35 bis 37,
D-7148 Remseck 2-Aldingen (DE)
Erfinder: Laing, Ingeborg, Hofener Weg 35 bis 37,
D-7148 Remseck 2-Aldingen (DE)
Erfinder: Laing, Oliver, Weissdornweg, D-7400 Tübingen
(DE)

(74) Vertreter: Goddar, Heinz J., Dr. et al, FORRESTER &
BOEHMERT Widenmayerstrasse 4/I,
D-8000 München 22 (DE)

## Beschreibung

Die Erfindung betrifft eine Folienscheibe aus organischem Werkstoff als innerhalb des Gebäudes aufsetzbare Zweitscheibe für Scheibenaussenwände, insbesondere von Gewächshäusern, die mit der Aussenscheibe eine wärmedämmende Luftschicht einsschliessen.

Die Wärmepreiserhöhung hat dazu geführt, dass neue Gewächshäuser mit Doppelscheiben ausgerüstet werden und bestehende Gewächshäuser nachträglich Zweitscheiben erhalten. So werden in einfach verglasten Gewächshäusern zusätzliche Scheiben in Form von Folien aus organischem transparentem Werkstoff eingezogen.

Bei derartigen Folien ist der Abstand zwischen der Folie und der Aussenscheibe kritisch, wird der Abstand nämlich zu eng gewählt, so besteht die Gefahr, dass sich die Folie gegen die durch Kondensation feuchte Aussenscheibe anlegt und dieser anhaftet, wodurch die Wärmedämmung verloren geht. Wird der Abstand zwischen Aussenscheibe und Folienscheibe dagegen so gross gewählt, dass die Folienscheibe die Aussenscheibe nicht berühren kann, so wird – insbesondere bei hohen Temperaturdifferenzen zwischen der Aussenscheibe und dem Gebäudeinnenraum – eine Konvektion in dem Bereich zwischen Aussenscheibe und Folienscheibe auftreten.

Ein weiterer Nachteil der genannten Folienscheiben aus organischem transparentem Werkstoff besteht darin, dass diese – anders als Glas – zu Feintröpfchen-Kondensation neigen. Durch diese Feintröpfchen-Kondensation wird bis zu 40% der Einstrahlungsenergie reflektiert, was insbesondere während der lichtarmen Winterperioden zu Lichtmangel führt.

Die Verwendung von Kunststoff-Zweitscheiben ist aus der DE-U-1 911 212 bekannt, bei der diese Zweitscheiben über permanent-magnetische Gummistreifen mit dem Rahmengerüst des Gebäudes, etwa also des Gewächshauses, verbunden sind. Aus der DE-A-27 481 749 sind Substanzen bekannt, die, auf Scheiben aus Kunststoff oder Glas aufgetragen, die Oberfläche hydrophil machen und dadurch ein Beschlagen verhindern. Es hat sich jedoch gezeigt, dass diese Substanzen oft bereits nach wenigen Tagen durch den ablaufenden Kondensatstrom wieder weggeschwemmt sind, so dass ein solcher Auftrag in regelmässigen Abständen neu erfolgen müsste. Es sind aber auch Verfahren bekannt geworden, die auf Kunststoff oder Glas eine Zelluloseesterschicht vorsehen, die mit Formaldehydhydrophil gemacht wird (DE-A-2 159 257).

Der Erfindung liegt die Aufgabe zugrunde, eine Folienscheibe aus organischem Werkstoff und ihre Befestigung an der Scheibenaussenwand derart auszugestalten, dass sie dauerhaft eine ausreichende Wärmedämmung gewährleistet.

Erfindungsgemäss wird diese Aufgabe gelöst durch eine Vielzahl von Distanzhaltern in Form von Ausstülpungen der Folienscheibe oder Distanzkörpern mit mindestens einem einseitigen Saugnapf, welche einen Abstand zwischen Folienscheibe und Aussenscheibe aufrechterhalten, bei dem auch bei den höchsten vorkommenden Temperaturdifferenzen noch keine Konvektion im Raum zwischen Folienscheibe und Aussenscheibe auftritt.

Die Unteransprüche kennzeichnen vorteilhafte Ausgestaltungen einer derartigen Folienscheibe und deren Befestigung.

Weitere Vorteile der Erfindung ergeben sich aus der nachfolgenden Beschreibung, in der ein Ausführungsbeispiel anhand der Zeichnung im einzelnen erläutert ist. Dabei zeigt:

Fig. 1 einen Querschnitt durch eine Gewächshausscheibe und die darunter gespannte Folienscheibe;

Fig. 2 eine Draufsicht auf eine Scheibe gemäss Fig. 1;

Fig. 3 die Ausbildung des Magnetgummielementes;

Fig. 4 den Verlauf der magnetischen Kraftlinien;

Fig. 5 das Konstruktionsdetail der Klammer.

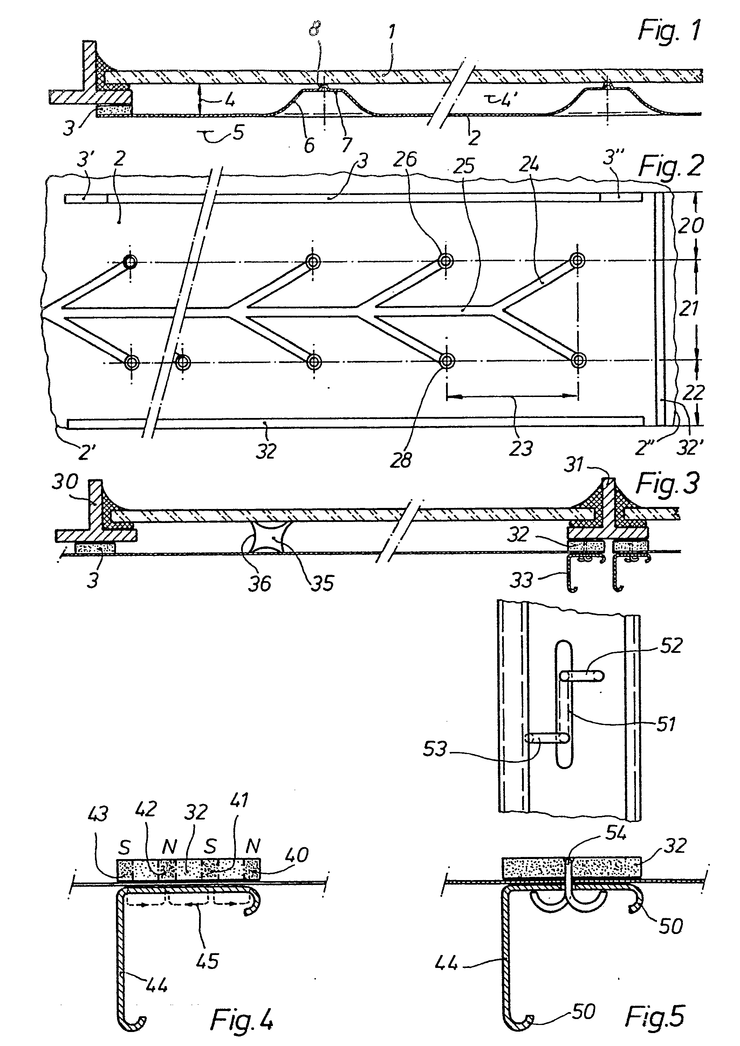

In Fig. 1 sind eine Aussenscheibe 1 – etwa aus Glas – und die darunterliegende Folienscheibe 2, die durch permanent-magnetische Streifen 3 aus Oxydwerkstoff, z.B. Barium-Hexaferrit – in gummielastischen oder plastischen Bindesubstanzen gehalten ist, gezeigt. Die zum Innenraum des Gebäudes hinweisende Oberfläche der Folienscheibe 2, die aus einem Trägerwerkstoff hoher Festigkeit, wie z.B. Polyester, Polykarbonat oder Polyacrylat besteht, ist mit einem verseifbaren, transparenten Lack beschichtet. Danach wird die nach innen weisende Oberfläche der Folienscheibe 2 verseift und durch Abwaschen der durch die Verseifung wasserlöslich gemachten Azetat- oder Butyrat-Anteile gereinigt.

Ausstülpungen 6 der Folienscheibe 2 verhindern, dass sich die Folienscheibe 2 an die Aussenscheibe 1 anlegt und an dieser anhaftet. Dabei ist der entstehende Abstand 4 zwischen der Aussenscheibe und der Folienscheibe so gewählt, dass auch bei den höchsten vorkommenden Temperaturdifferenzen zwischen dem Innenraum 5 und der Aussenscheibe 1 gerade noch keine thermische Konvektion einsetzt, der Abstand beträgt vorzugsweise etwa 17 mm. Die Ausstülpungen 6 sind durch plastische Verformungen erzeugt, die vorzugsweise in eine parallele Fläche 7 übergehen, die ihrerseits eine kleine, fast punktförmig auslaufende Ausstülpung 8 aufweist.

Fig. 2 zeigt die Verteilung dieser Ausstülpungen auf einer mit den Magnetstreifen 3 parallel zur Dachschräge verlaufenden Folienscheibe in der Draufsicht. Die Ausstülpungen 8 sind vorzugsweise über die Breite so verteilt, dass sich die Abstände 20, 21 und 22 wie 2 : 3 : 2 verhalten. Die nächste Reihe folgt im Abstand 23, der dem 1,5- bis 2fachen des Abstandes 20 entspricht. Durch Verseifung sind die der Kondensatableitung dienenden Strassen 24, die sämtlich in die Sammelstrasse 25 einmünden, hydrophil gemacht. Dies erfolgt erfindungsgemäss dadurch, dass die Strassenbereiche mit einem Zelluloseazetatlack bedruckt werden und im Anschluss daran durch Hydroxide verseift werden, wodurch der Azetat- bzw. Butyrat-Anteil wasserlöslich wird und danach ausgewaschen wird. Über die Bereiche 8, 7 und 6 abfliessendes Kondensat fliesst ohne Tröpfchenbildung als dünner Film längs dieser Strassen zum tiefsten Niveau der Folienscheibe. Da die auf die Magnetstreifen 3 wirkenden Kräfte an den beiden Enden einer Scheibe am grössten sind, sieht die Erfindung vorzugsweise dort Streifen 32 mit stärkerer Magnetkraft vor. Ebenso sieht die Erfindung gegebenenfalls vor, dass die äusseren Bereiche 3' der Magnetstreifen eine verstärkte Magnetkraft aufweisen. So kann erfindungsgemäss auch der mittlere Bereich 3 aus isotropem Magnetwerkstoff bestehen. Die Randstreifen 2' und 2'' werden an die horizontal verlaufenden Konstruktionselemente des Gewächshauses angelegt und über Magnetstreifen 32' mit diesen verbunden. Dadurch ist der gesamte Innenraum 4' gemäss Fig. 1 zum Innenraum 5 hin zur Kondensationsverhinderung abgedichtet.

Fig. 3 zeigt die Anordnung der Magnetstreifen, mit denen die Folienscheibe 2 an den eisernen Sprossen 30 und 31 befestigt wird. Die Magnetstreifen 32 sind vorzugsweise durchmagnetisiert und über Klammern mit den äusseren Schienen 33 verbunden. Vorzugsweise werden so viele Folienabschnitte nebeneinander angeordnet, dass einstückige Elemente von 3 bis 6 Metern entstehen. An die Stelle der Ausstülpung können auch Distanzhalter 35 treten, die an der Scheibe 1 befestigt werden und einseitig oder auch beidseitig saugnapfähnlich ausgebildete Vertiefungen 36 aufweisen. Alle konstruktiven Merkmale sind nicht auf Scheiben mit hydrophiler Oberfläche beschränkt.

Fig. 4 zeigt die Art der Magnetisierung. Aus der Darstellung ist ersichtlich, dass der magnetische Rückschluss der Pole 40 bis 43 des durchgehend magnetisierten anisotropen Magnetgummistreifens 32 durch das Eisen der Schiene 44 erfolgt. Die im Eisen verlaufenden Rückschluss-Kraftlinien sind gemäss 45 symbolisch gestrichelt dargestellt.

Fig. 5 zeigt den mechanischen Aufbau der Verbindung von Folie und Magnetstreifen. Die Schiene 44 hat U- oder L-förmiges Profil mit abgebogenen Kanten 50 und in regelmässigen Abständen von z.B. 10 cm Schlitze 51. Durch diese Schlitze ragen die Schenkel 52 und 53 der Klammern 54 hindurch und sind in entgegengesetzte Richtungen abgebogen. Beim Klammern wird die Kraft so bemessen, dass der Klammerrücken 54 in den Magnetstreifen eindringt, so dass sich keine Erhebungen ergeben. Die Schlitze 51 sind um die Ausdehnungswege der unterschiedlich sich ausdehnenden Werkstoffe Eisen, Folien- und Gummiwerkstoffe länger als der Klammerrücken. Durch die erfindungsgemässen Magnetstreifen 32 aus wärmeisolierendem Werkstoff werden auch die gut wärmeleitenden Sprossen 30 und 31 isoliert, so dass die sonst bevorzugt über diese Bereiche verlaufenden Wärmeströme annähernd zu Null werden. Die aus Folien und Magnetstreifen bestehende Zweitscheibe bedarf der verseiften Oberfläche nicht, wenn der Innenraum 5 eine so hohe Feuchtigkeit aufweist, dass die durch Kondensation entstehenden Tröpfchen zusammenwachsen. Für diesen Fall bezieht sich die Erfindung auf die Ausbildung der Zweitscheiben, die Fixierung durch Magnetstreifen und die Isolation der Sprossen.

**Patentansprüche**

1. Folienscheibe (2) aus organischem Werkstoff als innerhalb des Gebäudes aufsetzbare Zweitscheibe für Scheibenaussenwände, insbesondere von Gewächshäusern, die mit der Aussenscheibe (1) eine wärmedämmende Luftschicht (4') einschliessen, gekennzeichnet durch eine Vielzahl von Distanzhaltern (6, 35) in Form von Ausstülpungen (6) der Folienscheibe (2) oder Distanzkörpern (35) mit mindestens einem einseitigen Saugnapf (36), welche einen Abstand zwischen Folienscheibe (2) und Aussenscheibe (1) aufrechterhalten, bei dem auch bei den höchsten vorkommenden Temperaturdifferenzen noch keine Konvektion im Raum zwischen Folienscheibe (2) und Aussenscheibe (1) auftritt.

2. Folienscheibe nach Anspruch 1, dadurch gekennzeichnet, dass die Ausstülpungen (6) einen kegeligen Bereich, einen kreisförmigen Bereich (7) und einen Vorsprung (8) aufweisen, der eine annähernd punktförmige Berührung der Aussenscheibe (1) sicherstellt.

3. Folienscheibe nach Anspruch 1 oder 2, dadurch gekennzeichnet, dass sie mindestens auf der zum Gebäudeinneren weisenden Oberfläche eine oberflächige Schicht aus einem hydrophilisierbaren Werkstoff, z.B. aus Zelluloseazetat oder Zellulosebutyrat, aufweist und dass die Oberfläche dieser Schicht oberflächlich, z.B. durch Kalilauge, verseift ist.

4. Folienscheibe nach einem der vorangehenden Ansprüche, dadurch gekennzeichnet, dass die zur wärmedämmenden Luftschicht (4') weisende Oberfläche mindestens längs einer oder mehrerer Fallinien durch Verseifung hydrophil gemachte Bereiche (24, 25) aufweist.

5. Folienscheibe nach einem der vorangehenden Ansprüche, dadurch gekennzeichnet, dass an ihren axialen Enden Randbereiche (2', 2'') verbleiben, die über wärmeisolierende Magnetstreifen (32') mit horizontal verlaufenden Tragelementen, z.B. eisernen Pfetten, verbindbar sind.

6. Folienscheibe nach Anspruch 5, dadurch gekennzeichnet, dass ihre Länge so gewählt ist, dass die Endbereiche mit den Magnetstreifen (32') als Kältebrücken wirkende vertikale Sprossen (31) fast vollständig verdecken.

7. Folienscheibe nach Anspruch 5 oder 6, dadurch gekennzeichnet, dass die sie begrenzenden Magnetstreifen (32') eine höhere Magnetkraft aufweisen als die dazwischenliegenden Magnetstreifen (3).

8. Folienscheibe nach Anspruch 7, dadurch gekennzeichnet, dass die Endbereiche (3', 3'') der Magnetstreifen (3) eine höhere Magnetkraft aufweisen als die mittleren Bereiche.

9. Folienscheibe nach einem der Ansprüche 5 bis 8, dadurch gekennzeichnet, dass die Magnetstreifen (3, 32, 32') durch metallische Schienen (33, 44) versteift sind und dass die Folienscheibe (2) zwischen dem Magnetstreifen (32) und der Schiene (33) verläuft.

10. Folienscheibe nach Anspruch 9, dadurch gekennzeichnet, dass die Schienen (33, 34) aus Eisen bestehen und den magnetischen Rückschluss der Pole (N, S) der Magnetstreifen (3, 32, 32') bilden.

11. Folienscheibe nach Anspruch 9 oder 10, dadurch gekennzeichnet, dass der Magnetstreifen (32) über Klammern (54) mit der Schiene (44) längsverschieblich verbunden ist.

## Claims

1. Sheet pane (2) of organic material as internally mountable second pane for glass outer walls particularly of greenhouses which enclose a heat-insulating air layer (4') with the outer pane (1), characterized by a plurality of spacers (6, 35) in the form of protruberances (6) of the sheet pane (2) or distance pieces (35) with at least one one-sided suction pad (36) which maintain a gap between sheet pane (2) and outer pane (1) whereby there is no convection in the space between sheet pane (2) and outer pane (1) even at the highest occurring temperature differences.

2. Sheet pane as defined in Claim 1, wherein the protruberances (6) exhibit a conical area, a circular area (7) and a projection (8) which ensures approximately point contact with the outer pane (1).

3. Sheet pane as defined in Claim 1 or 2, wherein, at least on the surface facing the interior of the building, said sheet pane exhibits a surface layer of a hydrophilizable material, e.g. cellulose acetate or cellulose butyrate whereby the surface of this layer is superficially saponified, e.g. by caustic potash solution.

4. Sheet pane as defined in any one of the preceding claims, wherein, at least along one or more lines or slope, the surface facing the heat-insulatin air layer (4') exhibits areas (24, 25) which have been made hydrophilic by saponification.

5. Sheet pane as defined in any one of the preceding claims, wherein remaining at its axial ends are edge areas (2', 2'') which can be connected by means of heat-insulating magnetic strips (32') to horizontally extending supporting elements, e.g. iron purlins.

6. Sheet pane as defined in Claim 5, wherein its length is such that the end areas with the magnetic strips (32') almost entirely conceal vertical rungs (31) which act as cold bridges.

7. Sheet pane as defined in Claim 5 or 6, wherein the magnetic strips (32') which limit said sheet pane exhibit a greater magnetic force than the intermediate magnetic strips (3).

8. Sheet pane as defined in Claim 7, wherein the end areas (3', 3'') of the magnetic strips (3) exhibit a greater magnetic force than the middle areas.

9. Sheet pane as defined in any one of Claims 5 to 8, wherein the magnetic strips (3, 32, 32') are stiffened by metal rails (33, 44) whereby the sheet pane (2) extends between the magnetic strip (32) and the rail (33).

10. Sheet pane as defined in Claim 9, wherein the rails (33, 34) are made of iron and form the magnetic back-circuit of the poles (N, S) of the magnetic strips (3, 32, 32').

11. Sheet pane as defined in Claim 9 or 10, wherein the magnetic strip (32) is longitudinally displaceably connected by means of clamps (54) to the rail (44).

## Revendications

1. Feuille de vitrage (2) en une matière organique utilisable comme seconde vitre pour des parois de vitrage extérieures à l'intérieur d'une construction, en particulier dans des serres, et qui emprisonne, avec la vitre extérieure (1), une couche d'air (4') constituant une isolation thermique, caractérisée par une série d'entretoises (6, 35) sous la forme de déformations (6) de la feuille de vitrage (2) ou d'éléments d'écartement (35) qui comporte, au moins d'un côté, une ventouse (36), et qui maintiennent un certain espacement entre la feuille de vitrage (2) et la vitre extérieure (1), de sorte que même aux différences de températures les plus élevées pouvant se présenter, il ne se produit pas de circulation par convection dans l'espace compris entre la feuille de vitrage (2) et la vitre extérieure (1).

2. Feuille de vitrage selon la revendication 1, caractérisée en ce que les déformations (6) présentent une région conique, une région circulaire (7) et une saillie (8) qui assure un contact approximativement ponctuel avec la vitre extérieure (1).

3. Feuille de vitrage selon la revendication 1 ou 2, caractérisée en ce qu'au moins sur la face orientée vers l'intérieur de la construction, elle présente une couche superficielle en une matière pouvant être rendue hydrophile, par exemple, en acétate de cellulose ou en butyrate de cellulose, et en ce que la surface libre de cette couche est superficiellement saponifiée, par exemple par une lessive de potasse.

4. Feuille de vitrage selon l'une des revendications précédentes, caractérisée en que la surface orientée vers la couche d'air (4') assurant l'isolation thermique présente, au moins le long d'une ou de plusieurs lignes de ruissellement, des régions (24, 25) rendues hydrophiles par une saponification.

5. Feuille de vitrage selon l'une des revendications précédentes, caractérisée en que qu'à ses extrémités axiales, subsistent des régions marginales (2', 2'') qui peuvent être reliées par des bandes magnétiques calorifuges (32') à des éléments de supports s'étendant horizontalement, par exemple, à des pannes de fer.

6. Feuille de vitrage selon la revendication 5, caractérisée en ce que sa longueur est calculée de façon que les régions d'extrémité portant les bandes magnétiques (32') couvrent presque com-

plètement des barreaux verticaux (31) constituant des ponts conducteurs du froid.

7. Feuille de vitrage selon la revendication 5 ou 6, caractérisée en ce que les bandes magnétiques (32′), qui la limitent, présentent une force magnétique plus élevée que les bandes magnétiques intermédiaires (3).

8. Feuille de vitrage selon la revendication 7, caractérisée en ce que les régions d'extrémité (3′, 3″) des bandes magnétiques (3) présentent une plus grande force magnétique que les régions centrales.

9. Feuille de vitrage selon l'une des revendications 5 à 8, caractérisée en ce que les bandes magnétiques (3, 32, 32′) sont renforcées par des glissières métalliques (33, 44) et en ce que la feuille de vitrage (2) s'étend entre la bande magnétique (32) et la glissière (33).

10. Feuille de vitrage selon la revendication 9, caractérisée en ce que les glissières (33, 34) sont en fer et constituent le circuit magnétique de retour entre les pôles (N, S) des bandes magnétiques (3, 32, 32′).

11. Feuille de vitrage selon la revendication 9 ou 10, caractérisée en ce que les bandes magnétiques (32) sont reliées à la glissière (44) par des agrafes (54) de façon à pouvoir être déplacées longitudinalement.

Fig. 1

Fig. 2

Fig. 3

Fig. 4

Fig. 5